Europäisches Patentamt

European Patent Office

Office européen des brevets

(19)

(11) Numéro de publication: **0 114 546**
**A1**

(12)

# DEMANDE DE BREVET EUROPEEN

(21) Numéro de dépôt: **83402396.2**

(22) Date de dépôt: **13.12.83**

(51) Int. Cl.³: **A 23 L 1/33**

(30) Priorité: **17.12.82 FR 8221169**

(43) Date de publication de la demande:
**01.08.84 Bulletin 84/31**

(84) Etats contractants désignés:
**BE CH DE IT LI**

(71) Demandeur: **Jami, Benoit**
**73 rue Curial**
**F-75019 Paris(FR)**

(72) Inventeur: **Jami, Benoit**
**73 rue Curial**
**F-75019 Paris(FR)**

(74) Mandataire: **Parret, Louis et al,**
**CABINER PARRET 1 rue de Prague**
**F-75012 Paris(FR)**

(54) **Procédé de préparation et de conditionnement d'un assortiment de fruits de mer.**

(57) L'invention a pour objet un procédé de préparation et de conditionnement d'un assortiment de fruits de mer, suivant lequel ledit assortiment, composé de divers fruits de mer cuits à point par catégories en fonction du temps qui leur est imparti, ayant subi un traitement pour que les différents composants aient la grosseur et le goût souhaités, congelés individuellement avant d'être mélangés suivant leur utilisation et ensachés, est un produit prêt à l'emploi.

EP 0 114 546 A1

Procédé de préparation et de conditionnement d'un assortiment de fruits de mer.

La présente invention a pour objet un procédé de préparation et de conditionnement d'un assortiment de fruits de mer.

Lorsqu'il s'agit de confectionner différents plats cuisinés à base de fruits de mer, tels que pizza fruits de mer, lasagne avec sauce aux fruits de mer, salade de fruits de mer, etc..., que ce soit en restauration ou en cuisine particulière, on se trouve dans l'obligation de se procurer les différents composants séparément. A titre d'exemple, pour une pizza aux fruits de mer dans la composition de laquelle entrent des calmars, des moules, des crevettes et, parfois, des coques, il est nécessaire d'acheter séparément ces trois ou quatre produits.

Il est à remarquer également qu'il n'est pas possible de se procurer, déjà cuits et découpés, certains des produits dans le commerce.

Pour la ménagère, celle-ci doit se les procurer dans le commerce de détail; elle se trouve souvent dans l'obligation de s'adresser à des magasins spécialisés, afin de se procurer tout ce qui lui est indispensable, d'où perte de temps et coût élevé si l'on tient compte du prix d'achat et de la réduction de certains produits à la cuisson.

Le problème est beaucoup plus difficile à résoudre en restauration, que ce soit pour collectivités ou restaurants, car il est nécessaire de recourir, pour abaisser le prix de revient, à un distributeur spécialisé qui livre les produits par cartons, que l'on doit ensuite stocker en congélateurs, étant donné que tout ou partie de ces produits proviennent du surgelé.

Outre les installations et place nécessaires au stockage, il est indispensable de procéder à de nombreuses opérations pour la préparation, le mélange et le dosage harmonieux des différents ingrédients, à savoir : Cuisson de certains, tels que calmars, coquilles Saint-Jacques, crevettes, et mélange avec des produits déjà cuits, tels que moules, crabes, et précuits, tels que coques, afin qu'à la consommation l'ensemble ait la même finesse et soit cuit à point pour le plaisir de l'utilisateur.

Pour cela, il y a lieu de procéder avant ou après la cuisson au découpage, afin que les différents composants aient la grosseur adéquat à l'utilisation, en tenant compte que les calmars, coquilles et crevettes perdent suivant le produit, sa provenance et son glaçage, 10 à 50 % de leur poids et volume à la cuisson, et de prévoir le mélange des produits - en fonction d'une consommation problématique - sur une semaine ou plus.

D'autre part, une fois décongelés, il est indispensable de cuire immédiatement les produits avant de les recongeler. Le consommateur ou utilisateur n'a souvent ni la technique, ni le matériel adéquat pour procéder à cette opération, ce qui entraîne des pertes, en particulier par manque de consommation. Différents autres motifs de pertes sont dus, par suite de fautes de préparation, mauvais dosage, de faute de qualité, par exemple achat de l'un ou l'autre des produits qui, après cuisson, sont durs ou présentent une mauvaise odeur ou sont désagréables au goût, ce qui entraîne le rebut de la préparation.

La présente invention a pour but de remédier à ces divers inconvénients.

Elle est essentiellement caractérisée en ce qu'il s'agit d'un produit prêt à l'emploi avec ou sans décongélation que le consommateur peut utiliser à sa convenance, pouvant se présenter en sachets ou en cartons, congelés ou en conserve.

Diverses caractéristiques et avantages de la présente invention ressortent de la description détaillée qui suit.

Le mélange peut se faire avec les différents fruits de mer suivants :

. Céphalopodes, tels que  :  Encornets, seiches, poulpes,
etc...

. Bivalves, tels que  :  Moules sans coquilles, demi-
coquilles ou avec coquilles - Coques décoquillées, Coquilles Saint-Jacques, Palourdes décoquillées, etc...

. Crustacés, tels que  :  Crevettes entières ou décortiquées, Chair ou pinces de crabes, Langoustines, etc...

Il est bien entendu que le mélange peut être effectué avec deux ou plusieurs de ces produits  ( trois, quatre,
cinq, six ou plus ), suivant les préparations culinaires.

Le procédé de réalisation est le suivant :

On procède à la décongélation des différents produits, la majeure partie se présentant sous cette forme,
puis à la cuisson par catégories, suivant le temps qui doit
leur être imparti. Cette opération terminée, on effectue un
premier rinçage, puis il est procédé au découpage, afin que
les différents composants aient la grosseur voulue, en particuculier pour les bivalves et les céphalopodes, ensuite un
trempage pour éliminer toutes les impuretés auquel succèdent
un second rinçage et égouttage.

Chaque unité de produits est ensuite étalée et
congelée; le point de congélation étant obtenu, on procède
à sa sortie et au mélange suivant les recettes à obtenir
(pizza, pâtes, telles que lasagne, spaghetti, sauce aux
fruits de mer, salade de fruits de mer, paella, etc...). Les
produits sont pesés et conditionnés en sachets ou en conserves par catégories de mélange.

Les sachets sont ensuite entreposés dans des car-

- 4 -

0114546

tons placés, suivant le mode de conservation, soit au congélateur (produits congelés); s'il s'agit de conserves, il
suffit d'adopter le processus habituel.

- 5 -     0114546

## REVENDICATIONS

------------------------

1. Procédé de préparation et de conditionnement d'un assortiment de fruits de mer, avec ou sans décongélation, cuit et mélangé suivant différentes recettes, et subissant différents traitements : Décongélation, précuisson ou cuisson, découpage, rinçage, trempage, égouttage, congélation, mélange et emballages, caractérisé en ce que ledit assortiment est un produit prêt à l'emploi.

2. Procédé suivant la revendication 1, caractérisé en ce qu'il est plus spécialement applicable à la préparation et à l'utilisation de céphalopodes cuits nettoyés ou non, découpés ou non, et à des céphalopodes cuits assortis (mélangés) à différents fruits de mer.

3. Procédé suivant les revendications 1 et 2, caractérisé en ce que les différents produits sont cuits par catégories en fonction du temps qui leur est imparti, subissent un traitement, pour que les différents composants aient la grosseur et le goût souhaités, sont congelés individuellement avant d'être mélangés suivant leur utilisation et ensachés.

Office européen
des brevets

**RAPPORT DE RECHERCHE EUROPEENNE**

0114546
Numéro de la demande

EP 83 40 2396

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl. ³) |
|---|---|---|---|
| A | US-A-1 713 279  (THOMAS SLADE GORTON) <br> * en entier * | 1,3 | A 23 L    1/33 |
| A | FR-A-1 296 334  (VALLEE) <br> * en entier * | 1 | |

DOMAINES TECHNIQUES RECHERCHES (Int. Cl. ³)

A 22 C
A 23 L

Le présent rapport de recherche a été établi pour toutes les revendications

| Lieu de la recherche <br> LA HAYE | Date d'achèvement de la recherche <br> 26-03-1984 | Examinateur <br> DE LAMEILLIEURE D. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82